# EUROPEAN PATENT SPECIFICATION

(11) **EP 2 503 895 B1**
(45) Date of publication and mention of the grant of the patent: **11.03.2015**
(21) Application number: 10796171.6
(22) Date of filing: 23.11.2010
(51) Int. Cl.: A23B 4/01, A23L 3/005, A23L 3/22

(54) **DEVICE FOR PASTEURIZING A MASS OF FOODSTUFF**
VORRICHTUNG ZUR PASTEURISIERUNG EINER LEBENSMITTELMASSE
DISPOSITIF DE PASTEURISATION D'UNE MASSE ALIMENTAIRE

(30) Priority: 23.11.2009 NL 2003853
(43) Date of publication of application: 03.10.2012
(73) Proprietor: Zwanenberg Food Group B.V., 7609 RG Almelo (NL)
(72) Inventor: SONDER, Herbert, Laurentius, Maria, NL-7622 DB Borne (NL)
(74) Representative: Land, Addick Adrianus Gosling
(86) International application number: PCT/NL2010/050782
(87) International publication number: WO 2011/062499

(56) References cited:
- EP-A1- 0 497 099
- WO-A1-2007/108674
- WO-A1-2007/108680
- JP-A- 2008 136 486
- US-A- 4 919 951
- US-A- 5 630 360

## Description

The invention relates to a device for pasteurizing a mass of foodstuff, such as a mass containing soya ingredients, a mass containing eggs, a mass containing fruits, for instance jam, a mass containing potatoes, or a mass containing meat, or the like, which device comprises:
a feed through which said mass can be supplied under pressure to the device at a determined flow rate;
first heating means, comprising:
   a first tube, connecting to the feed, of an electrically and magnetically inert material suitable for contact with foodstuff; and
   an arrangement of co-acting electrodes which are added to the first tube and which are connected to an RF power generator which generates energy at a frequency in the range of about 10-50 MHz to the electrodes such that the mass present in the first tube can be heated during its first residence time in this first tube.

Such a device is known from EP-A-2 007 230 in the name of the present applicant. When electrodes situated at the same axial position on either side of the first tube are used, the mutual distance between the RF voltage-carrying electrodes is limited, whereby the field strength in the mass of foodstuff to be heated can be locally very high. As a result there is a danger of a high local heating such that steam bubbles are formed. There is also a chance of voltage breakdown locally.

JP 2008 136486 A discloses a continuous Joule heating method and apparatus which can achieve stable continuous Joule heating by preventing excessive uneven heating and extreme excessive heating near a tube wall when continuously Joule-heating a food material, and by preventing sparks from being generated or the food material from deteriorating for fluid food material which causes heat denaturation caused by a laminar airflow.

For these reasons it is desirable to reduce the effective field strength in the mass to be heated. This can prevent the formation of steam occurring, which may cause cavitation in the mass, while voltage breakdown, which can cause degeneration and, in extreme cases, even local charring of the mass, can also be effectively prevented from occurring. Due to the high field strength gradients sometimes occurring locally the heating of the mass is further found not to take place wholly with the desired homogeneity.

The invention has for its object to obviate the stated limitations of the stated prior art and in this respect provides a device of the type stated in the preamble, which has the feature that co-acting electrodes are disposed with a mutual axial interspace, this interspace being at least 2x, preferably 5x, more preferably 10x larger than the largest linear transverse dimension of the inner space of the first tube.

It must be understood that when electrodes are placed at roughly the same axial position opposite each other the electrical field extends at least more or less in transverse direction relative to the tube, and thus the mass to be heated. The heating takes place only in the area where the electrodes are situated, and the electrodes must therefore have a substantial axial dimension, for instance in the order of 0.3 - 3 metres.

According to invention co-acting electrodes need only have a limited axial dimension, but the electrical field prevailing between adjacent, co-acting electrodes extends substantially in the longitudinal direction of the tube, whereby an effective heating of the mass is realized over a substantial distance. Because an effective heating takes place between the electrodes over the whole distance and the corresponding residence time, a high flow rate of the mass and a correspondingly high output can in this way be obtained without the above described prior art drawbacks occurring here.

The electrodes can in principle have substantially random forms. However, in view of the rotation symmetry of the most tubes, an embodiment will generally be recommended in which the electrodes take a cylindrical form.

Attention is drawn to the fact that adjacent electrodes carry a high voltage between them. They will thus be provided with an insulating sheath, as will the power supply cables with which they are connected to the RF power generator.

According to yet another aspect of the invention, the device has the special feature that the electrodes are alternately connected to the one terminal and to the other terminal of the RF generator. Use can thus be made for instance of an assembly of three electrodes disposed symmetrically relative to the central electrodes. The central electrode can be connected to the earthed output terminal of the RF generator, while the electrodes placed upstream and downstream of this electrode are connected to the other output terminal of the RF generator.

According to another aspect of the invention, the device has the special feature that the electrodes are disposed electrically insulated relative to the inner surface of the first tube coming into direct contact with the mass of foodstuff.

More than one first tubes can also be used, for instance two, three or even four. The mass for pasteurizing passes through each of these sub-tubes. Each of the sub-tubes is provided with its own co-acting electrodes, its own RF power generator and optionally its own impedance matching circuit. The device particularly comprises at least one second first tube, to which second first tube is added a second arrangement of co-acting electrodes which are connected to a second RF power generator which generates energy at a frequency in the range of about 10 - 50 MHz to the electrodes such that the mass present in the second first tube can be heated during its second first residence time in this second first tube, which co-acting electrodes of the second arrangement are disposed with a mutual axial interspace, this interspace being at least 2x, preferably 5x, more preferably 10x larger than the largest linear transverse dimension of the inner space of the first tube. Through the use of a plurality of tubes and the associated plurality of generators a greater quantity of mass per unit of time can be heated to the desired temperature. Power generators of this type are only available commercially up to a limited power, i.e. in the order of 70 - 90 kW. The use of only one generator would limit the flow rate for treating, and thereby the production capacity of the device, to values corresponding therewith. The use of a plurality of generators makes it possible to increase the maximum achievable capacity by two, three or four times, or to even higher values.

It must be noted that the sub-tubes which together form the first tube can in principle be connected to each other in series or in parallel as desired by the designer or the user. The required effect of increased capacity can be realized in all cases. In the case of parallel tubes the heating of the mass takes place in each sub-tube from the starting temperature to the desired end temperature, while in the case of tubes connected to each other in series the temperature increase takes place in more or less stepwise manner, for instance in the case of two tubes mutually connected in series from about 10 - 40°C in the first sub-tube and from about 40 - 70°C in the second sub-tube.

Parallel tubes have the advantage of a lower flow resistance, whereby the feed device is required to produce a lower infeed pressure. The drawback is that, while the tubes occupy a relatively small space in longitudinal direction, they necessarily entail larger dimensions in transverse direction.

The interspace between co-acting electrodes of the second arrangement of electrodes can optionally differ from the interspace between co-acting electrodes of the first arrangement. The temperature increase in the first sub-tube can hereby differ from the temperature increase in the second sub-tube.

The pasteurizing processing which is performed by the device according to the invention can also serve for allowing the treated mass to cure by the heating occurring for some time. A mixture of for instance meat ingredients, salt, spices and binding agents can thus be formed in one continuous treatment with the device according to the invention into a continuous sausage which is then portioned under sterile conditions, packaged and if necessary further confectioned, after which transport to the customers can take place.

According to another aspect of the invention, the device comprises a second tube which connects to the first tube or to the second first tube and to which second heating means are added, wherein the hot mass is held at substantially constant temperature during the second residence time in the second tube.

The second heating means can in principle be implemented in any desired manner. It will be apparent that the mass heated in the first tube by these electrical means must be prevented from undergoing a certain drying or other degeneration during its residence in the second heating means. A longer stay in air will generally result in undesirable effects, such as drying and possibly even oxidation. In order to effectively preclude these undesired phenomena, a variant can have the special feature that the second heating means comprise a second tube.

A heating element of a suitable type must be added to this second tube.

Very suitable is an embodiment comprising a jacket filled with a heatable second liquid and extending around the second tube.

For further processing of the mass thus pasteurized in the device, it will in many cases have to be given the opportunity to cool before being portioned and packed. If desired, this cooling can take place after portioning and packing.

An embodiment is often recommended comprising cooling means which connect to the second heating means and in which the hot mass is given the opportunity to cool during a third residence time in these cooling means, at the end of which cooling means the thus cooled mass is discharged for further processing.

Described above is that the second heating means preferably comprise a second tube. For the same reasons as stated above, the above described embodiment preferably has the feature that the cooling means comprise a third tube connecting to the at least one first tube or to the second tube.

Such a third tube can be wound in the form of a helix, thereby obtaining a great length in a relatively small space, whereby, optionally in combination with an external cooling medium, for instance flow-by air, a rapid cooling is obtained. Other than in the dielectric heating in the first tube, in this cooling section the heat is removed from the pasteurized mass solely by conduction. Necessary for this purpose is time, and therefore a relatively great length.

Use can also be made in per se known manner of a portioning process, optionally followed by a packing process, wherein the portions are guided through a cooling space by means of trolleys. A per se known lift-tower is suitable in this respect.

Attention is drawn to the fact that the inner diameter of the tubes does not have to be round. Any desired and technically realizable form can be chosen.

A device is known from WO-A-88/02222 for cooking and thus curing a meat-containing mass. For heating of the mass carried through the device under pressure use is made of a field, described as an electromagnetic field, with a frequency between 10 and 41 MHz, such that the mass is exposed to an efficient heating.

The medium is carried through the device by a pipe, leaves the device in hot state and in this state is cut into pieces or slices and, if desired, packed immediately thereafter.

WO-A-2004/039164 relates to a method and system for manufacturing a sausage product without casing. According to this known art the mass is heated by a first heating element based on heat conduction, then heated to an increased temperature by a second heating element, whereby a sausage without casing is obtained, after which the product is finally cooled in forced manner through the action of a cooler.

This specification mentions the possible application of microwave energy or radiofrequency or RF energy. The frequency ranges in question are not further defined in this publication. Since microwaves have by definition a frequency of more than 300 MHz, it is not possible as a result of the associated wavelengths to prevent hot and cold zones occurring in the mass to be heated. In respect of the wish for fully homogeneous heating this is highly undesirable, and even impermissible in respect of requirements set down for food products. The temperature to be reached is after all chosen with a view to a pasteurizing treatment, which requires a minimum temperature of 72°C everywhere in the heated mass, which temperature must be maintained for a time period in the order of a minimum of 2 minutes. In this respect frequencies over 300 MHz are certainly not suitable. This is the reason that an RF frequency in said range of about 10 - 50 MHz has been chosen according to the invention.

Compared to the two stated prior art references, it is deemed essential according to the invention that use be made of a substantial mutual interspace between the electrodes, thereby effectively preventing breakdown of the high RF voltage between the electrodes. According to the above cited prior art such a breakdown cannot be prevented and it is found in practice that local burning or other degeneration of the passing mass occurs as a consequence of this breakdown. This is an extremely undesirable phenomenon which in most cases causes a lack of control and degeneration which is completely unacceptable for food products.

Each of the tubes preferably has the same cross-sectional shape everywhere.

A material which is completely transparent for said frequencies is a plastic, for instance PTFE (polytetrafluoroethylene). This material has the further advantage of being very suitable for contact with food. It is a smooth material to which food products do not adhere, or hardly so. The material can further be very easily given a smooth finish, and thus be cleaned regularly in accordance with set requirements.

The electrodes can be of any suitable material. Aluminium plates can for instance be applied.

The device has an in-line arrangement and is able to perform a continuous and very homogeneous heating, wherein it can be ensured that the temperature difference between the hottest and the coldest zones in the heated mass is less than 5°C.

The system is capable of a rapid heating into the core of the mass, for instance at a speed in the order of magnitude of 1°C/s.

The temperature of the supplied mass can be assumed to be about 0°C - 10°C. The target temperature is reached at the end of the electrodes.

According to a determined aspect of the invention, the device has the special feature that the material of the second tube is stainless steel.

The device can also have the special feature that the material of the third tube is stainless steel.

Very practical is the embodiment in which the second and the third tube are embodied together as an integral tube.

According to a subsequent aspect according to the invention, the device has the special feature that the first residence time and the RMS RF voltage over the electrodes can be adjusted such that the temperature of the mass at the end of the first tube has a value in the range of about 70°C - 100°C.

The setting of said parameters for reaching said temperature depends inter alia on the salt content of the mass. The choice of the parameters must therefore also be made in the light thereof.

According to a following aspect of the invention, the device has the special feature that the average effective internal diameter of the first tube is in the range of about 20 - 150 mm. A value of 50 - 115 mm is particularly envisaged here.

Another aspect of the dimensioning of the device can lie in the length of the electrodes being in the range of about 0.1 - 1 m. The electrodes preferably have a length in the order of 0.2 - 0.7 m.

The greatest efficiency of the RF heating is realized with an embodiment in which the electrodes each have a form corresponding with the shape of the tube.

A constant speed at a given mass flow rate and a total absence of discontinuities is realized with an embodiment in which the internal cross-sectional forms of mutually connecting tubes are the same as each other and correspond with the desired cross-sectional form of the end product.

Diverse liquids can be considered for filling the or each jacket. An embodiment is recommended in which the second liquid is water, preferably demineralized water, or an oil, preferably a thermal oil.

For the safety of operating staff and others present, the embodiment is recommended in which all RF voltage-carrying components are accommodated in a housing, in particular a Faraday cage. The mesh of the Faraday cage can be relatively coarse in respect of the relatively large wavelength, relative to microwave radiation, associated with the frequencies applied according to the invention.

In order to further increase the efficiency of heating of the mass for cooking and pasteurizing, the embodiment is recommended in which the liquid in an optional first heating jacket around the first tube is held at a temperature in the range of about 20°C - 100°C.

During a residence time of a minimum of two minutes in the section in which the mass is kept warm, for instance the second tube, the temperature everywhere in the mass for pasteurizing may not fall below a determined prescribed temperature, usually in the order of magnitude of 72°C - 75°C.

In a specific embodiment the device can for this purpose have the special feature that the liquid in the second jacket is held at a temperature in the range of about 70°C - 100°C.

A preferred aspect according to the invention lies in the fact that the electrodes are coupled to the associated RF generator via an adjustable impedance matching circuit.

The device can for instance have the feature that the feed is adapted for coupling to a preproduction device, for instance a meat pump. For this purpose the inlet side of the first tube can be provided with a flange, which is adapted for sealing coupling to a correspondingly formed outlet flange of a known meat pump.

The device can have the particular feature that the frequency lies in the range of 12 - 29 MHz.

According to yet another aspect of the invention, the device has the feature that the frequency has a value of 27 ± 2 MHz. The frequency 27.12 MHz is for instance a frequency allowed for industrial applications such as the present ones.

According to yet another aspect of the invention, the device has the special feature that the frequency has a value of 13.5 ± 1 MHz. The frequency 13.56 MHz is likewise allowed for industrial applications such as the present ones.

It is noted that the third tube subjects the cooked and pasteurized mass to a gradual cooling by conduction on the inside and convection on the outside. The third tube will therefore generally have to have a relatively great length compared to the first and the second tube.

In a specific embodiment the device has the special feature that the first and the second jacket are embodied together as one integral jacket. It is recommended in this case to fill the jackets with heated demineralized water.

It is further noted generally that the jackets through which heated liquid flows have the function of a primary circuit of a heat exchanger, the associated tube or tubes of which form the secondary circuit. Heat exchange thus takes place between the heated liquid and the mass for processing transported through the tubes. As generally known, a heat exchanger of this co-axial type has the highest efficiency in the case of backflow. With a view hereto the feed of the heated liquid will in this respect preferably be situated on the downstream side of the transported mass, while the discharge of this heated liquid, already slightly cooled in the heat exchanger, will be situated on the upstream side thereof.

According to a final aspect of the invention, the device has the special feature that downstream of the second tube a treatment section is present in which the hot mass is subjected to an after-treatment, such as smoking, adding of seasoning, grilling or the like.

The invention will now be elucidated with reference to the accompanying drawings. In the drawings:
Fig. 1 shows a highly simplified representation of an exemplary embodiment of a device according to WO-A-2007/108680, partially in the form of a block diagram and partially in cross-section;
Fig. 2 shows a longitudinal section through the device according to Fig. 1.
Fig. 3 shows partially in schematic cross-section and partially in the form of a block diagram a part of the device according to figure 1 modified according to the invention;
Fig. 4 shows a perspective view of the device of figure 3;
Fig. 5 shows the device of figure 4 with a water jacket;
Fig. 6 shows the device of figure 5 with a second tube and a second jacket and a third tube and a third jacket;
Fig. 7 shows a perspective view of the device of figure 4 with two sections; and
Fig. 8 shows the device of figure 7 with water jackets.

The figures show a device 1 for cooking and pasteurizing a meat-containing mass 4, which mass 4 is supplied to device 1 by a meat pump 2 of known type. The device comprises a feed 3 through which a mass 4 is supplied under pressure to device 1 at a determined flow rate; a first tube 5, connecting to feed 3, of an electrically and magnetically inert material suitable for contact with food, in particular PTFE; two plate-like electrodes 6, 7 situated on either side of first tube 5 and having a form corresponding to the external shape of first tube 5, which electrodes are connected to an RF power generator 8 which generates energy with a frequency in the range of about 27.12 MHz to electrodes 6, 7 such that mass 4 present in first tube 5 is heated dielectrically during its first residence time in this first tube 5; a first jacket 10 extending around first tube 5 and filled with demineralized water 9; a second tube 11 which connects to first tube 5 and in which the mass heated in first tube 5 is held at practically constant temperature during its second residence time of a minimum of two minutes in the second tube; a second jacket 13 extending around second tube 11 and filled with thermal oil 12; and a relatively long third tube 14 which connects to second tube 11 and in which the hot mass is given the opportunity to cool during its third residence time in this third tube, at the end 15 of which third tube 14 the thus cooled mass is discharged for further processing, for instance portioning and/or packing.

Second tube 11 and third tube 14 are embodied together as one integral, monolithic tube of stainless steel.

The first residence time and the RMS RF voltage over the electrodes can be adjusted such that the temperature of mass 4 has a value in the range of about 70°C - 90°C at the end 16 of first tube 5. For an energy transfer, and thus heating of mass 4, with the highest possible efficiency the electrodes 6, 7 are coupled to RF generator 8 via an impedance matching circuit 17. Circuit 17 comprises a variable capacitor 8 connected in series and a variable second capacitor 19 connected in parallel to electrodes 6, 7.

The RF generator 8 can be adapted to generate energy with a frequency of for instance 27.12 MHz or 13.56 MHz. These are both legally permissible frequencies for industrial applications of this type.

The first liquid is held at a desired temperature of for instance 40°C by means of a heating device 20 having a heat exchanger with a pump. In this embodiment a demineralizing unit 22 is also incorporated in supply conduit 21. In this case use is made of water. Other liquids such as thermal oil are also suitable.

The second liquid 12 can be brought to and held at the desired temperature in similar manner.

With a view to the requirements set down for pasteurization, the residence time of the hot mass in second tube 11 must be a minimum of two minutes.

The RF voltage-carrying components are all accommodated in a Faraday cage 23. This Faraday cage is earthed via an earth wire 23. Electrode 6 is also earthed, via an earth wire 25, with which the electrode is also coupled to the RF generator. This is therefore also earthed. Both the Faraday cage and said earthings are essential for the safety of operating staff.

It will be apparent that, also in the light of legal provisions, the device will comprise further safety provisions which for instance ensure that, when the device is opened or the earthing of the Faraday cage is interrupted, the RF voltage of the electrodes is immediately switched off, for instance by immediately switching off the RF power generator or generators.

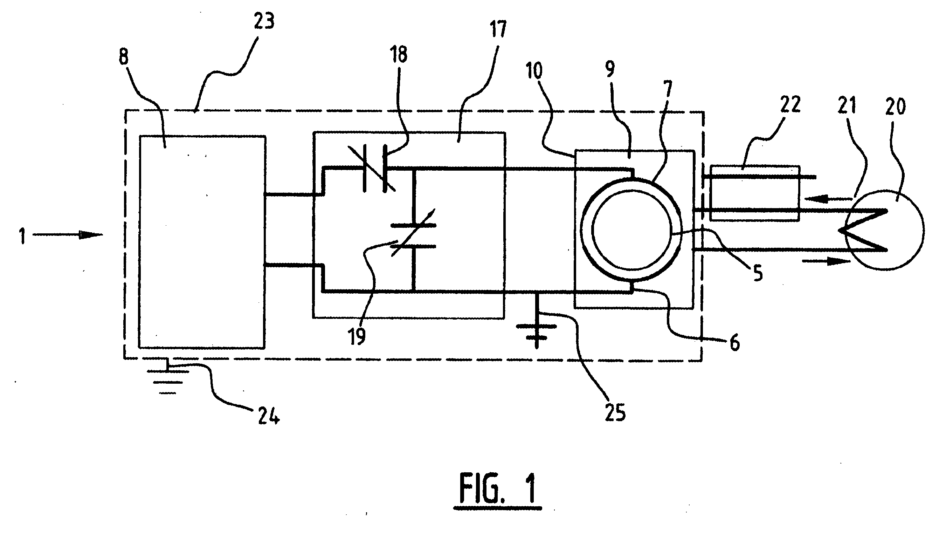

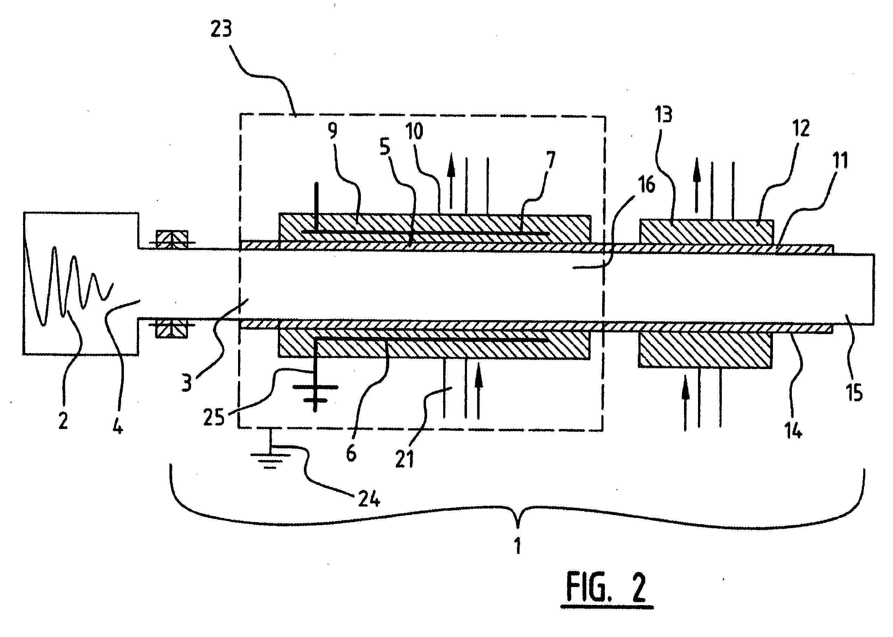

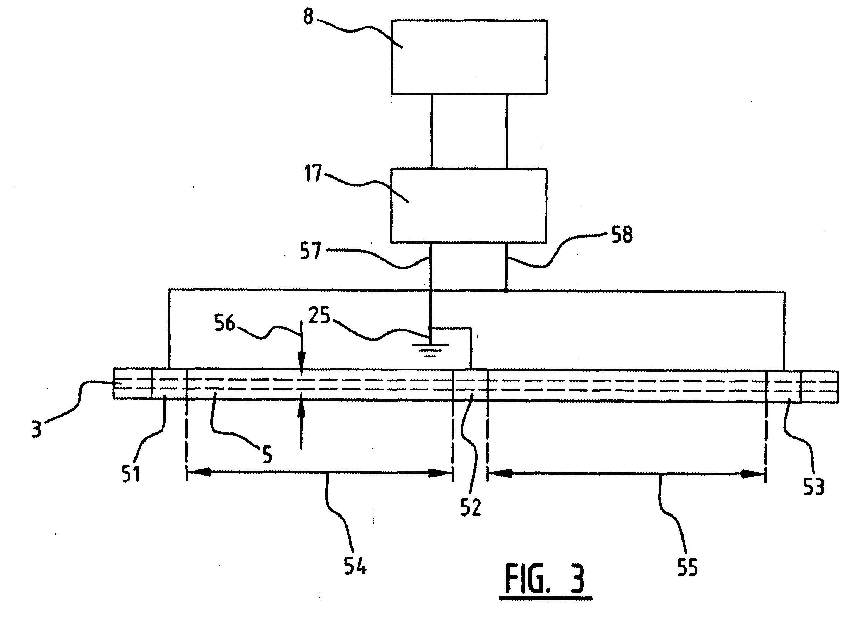

Fig. 3 shows a part of the device according to figure 2. Other than in device 1 according to figures 1 and 2, electrodes 51, 52, 53 are disposed with mutual interspaces 54, 55 (equal to each other in this embodiment), which are substantially larger than the diameter 56 of the in this case cylindrically formed inner space of tube 5. It is for instance possible to envisage a diameter 56 in the order of 60 mm and a mutual distance between adjacent electrodes 51, 52; 52, 53 in the order of 1 m or more.

Shown in a block diagram in figure 3 is that the impedance matching circuit 17 is received between RF generator 8 and electrodes 51, 52 and 53. This is not necessary however under all conditions. It is possible to envisage provisions being incorporated in generator 8 which realize an adjustability such that the greatest possible energy transfer is ensured.

Central electrode 52 is earthed and connected to the earthed, "cold" output terminal 57 of impedance matching circuit 17. Electrodes 51 and 53 situated symmetrically on either side of electrode 52 are both connected to the "hot" output terminal 58 of impedance matching circuit 17.

In the above stated device according to WO-A-2007/108680 it was considered desirable to apply a water jacket around the first tube, at least in the area of the electrodes. According to the invention such a water jacket can optionally be dispensed with, wherein device 1 is shown in figure 3 without water jacket.

Although not drawn in figure 3, it will be apparent that the use of an earthed Faraday cage is also an important safety measure in the embodiment according to figure 3. Nor does figure 3 show infeed provisions, such as a meat pump, and means for keeping the mass warm which ensure that the mass heated in first tube 5 remains at its increased temperature for some time. The high quality of the pasteurizing process is hereby guaranteed in simple manner.

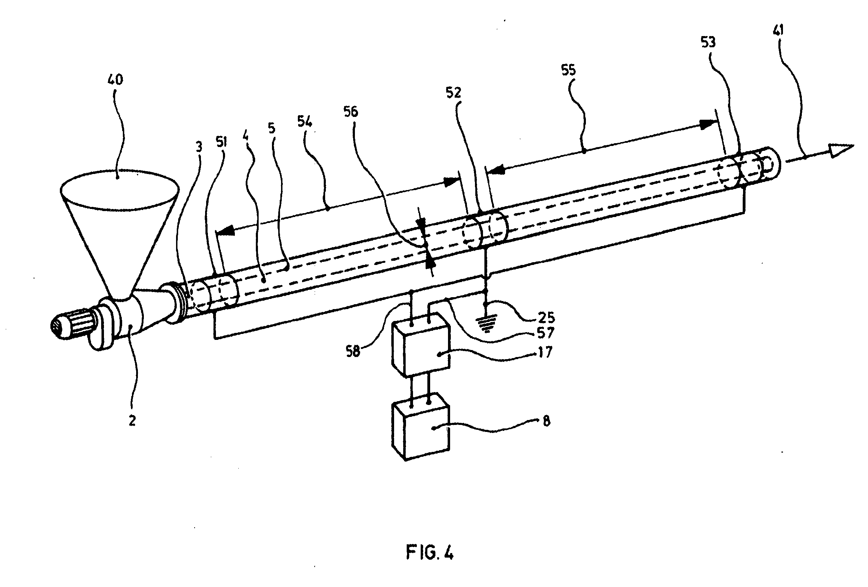

Figure 4 shows a perspective view of device 1 for cooking and pasteurizing a meat-containing mass according to figure 3. A hopper 40 and an extruder or pump 2 connecting thereto are further disposed upstream in the direction of movement 41 of the mass for the purpose of pumping the mass out of hopper 40 into feed 3. As shown in figure 4, electrodes 51, 52 and 53 have a cylindrical form, this form being adapted to cylindrical tube 5. Co-acting electrodes 51 and 52 are disposed with a mutual axial interspace 54 and co-acting electrodes 52 and 53 are disposed with a mutual axial interspace 55. For the further description of figure 4 reference is made to the figure description in figure 3, wherein the same reference numerals designate the same components.

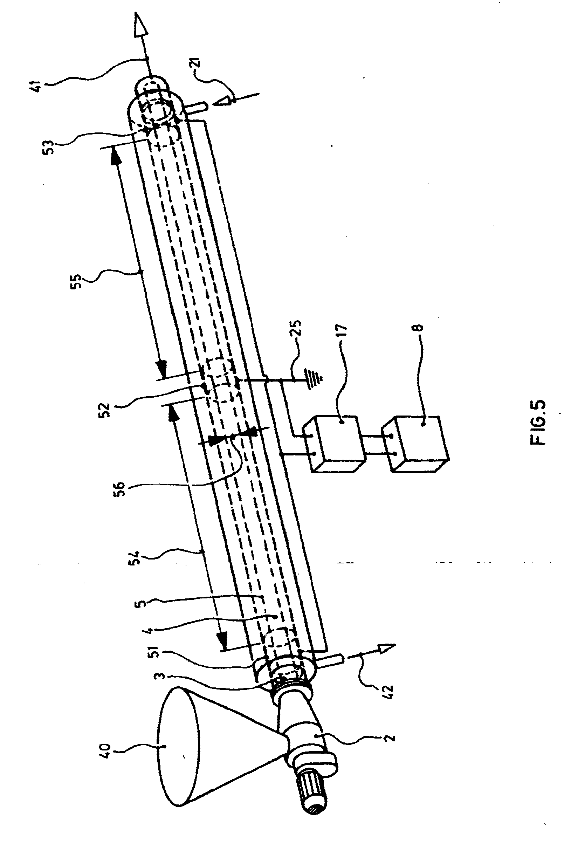

Figure 5 shows device 1 of figure 4, wherein a water jacket 10 is added to first tube 5. Water jacket 10 is provided with a feed conduit 21 and a discharge conduit 42. A demineralizing unit as shown with numeral 22 in figure 1 can optionally be added.

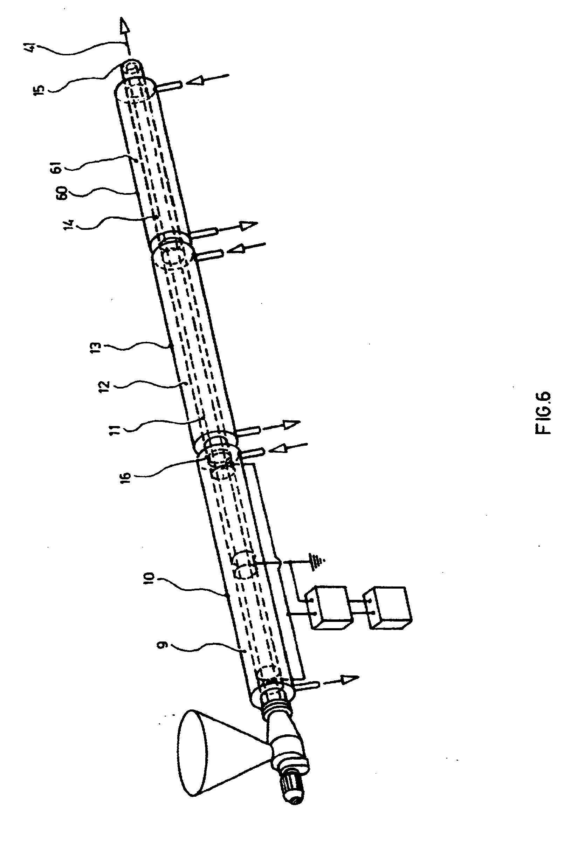

Figure 6 shows the device of figure 5, wherein a second tube 11 connects downstream to first tube 5, to which second tube 11 is added a jacket 13 which is filled with water or oil for holding the mass at substantially constant temperature during a second residence time of a minimum of two minutes in second tube 11. The temperature is for instance around 70□C. Connecting downstream to the second tube is a third tube 14, to which cooling means in the form of a water jacket 60 filled with water 61 are added for cooling the hot mass discharged by second tube 11 during a third residence time in third tube 14. Instead of or in addition to the cooling means, it is possible for third tube 14 to be relatively long so that hot mass discharged by second tube 11 can cool in third tube 14.

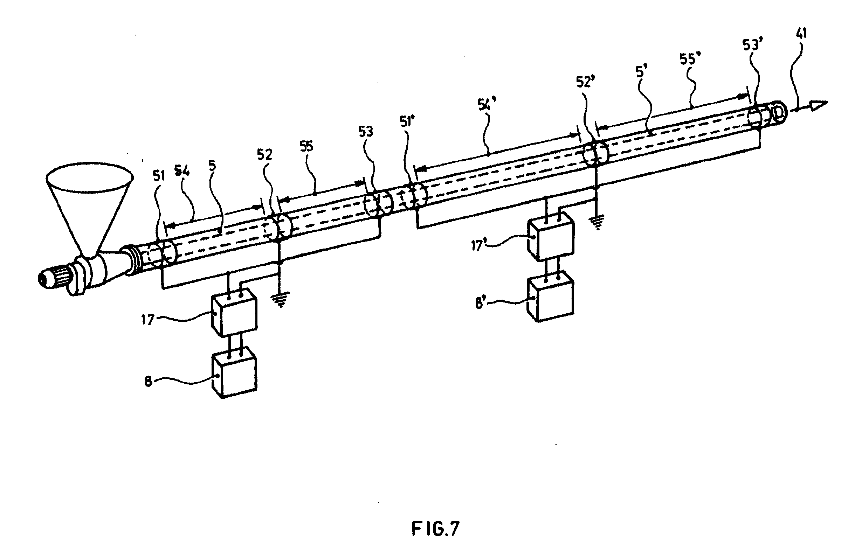

Figure 7 shows the device of figure 4 with two sections. A first section comprises first tube 5 and an arrangement of co-acting electrodes 51, 52 and 52, 53 added to first tube 5 and connected to an RF power generator 8. A second section comprises a second first tube 5' and an arrangement of co-acting electrodes 51', 52' and 52', 53' added to second first tube 5' and connected to a second RF power generator 8'. Co-acting electrodes 51 and 52 are disposed with an axial interspace 54, co-acting electrodes 52 and 53 are disposed with an axial interspace 55, co-acting electrodes 51' and 52' are disposed with an axial interspace 54' and co-acting electrodes 52' and 53' are disposed with an axial interspace 55'. As shown in figure 7, first tube 5 and second first tube 5' are connected in series to each other. The temperature increase can hereby take place in more or less stepwise manner, for instance from about 10 - 40□C in first tube 5 and from about 40 - 70□C in second first tube 5'.

As can be seen from figure 7, the interspaces 54' and 55' between co-acting electrodes 51', 52' and 52', 53' of the second arrangement of electrodes of the second section can differ from the interspaces 54 and 55 between co-acting electrodes 51, 52 and 52, 53 of the first arrangement of the first section. Interspaces 54, 55 of the first section can for instance be smaller than interspaces 54', 55' of the second section, whereby the temperature increase in the first section will be lower than the temperature increase in the second section.

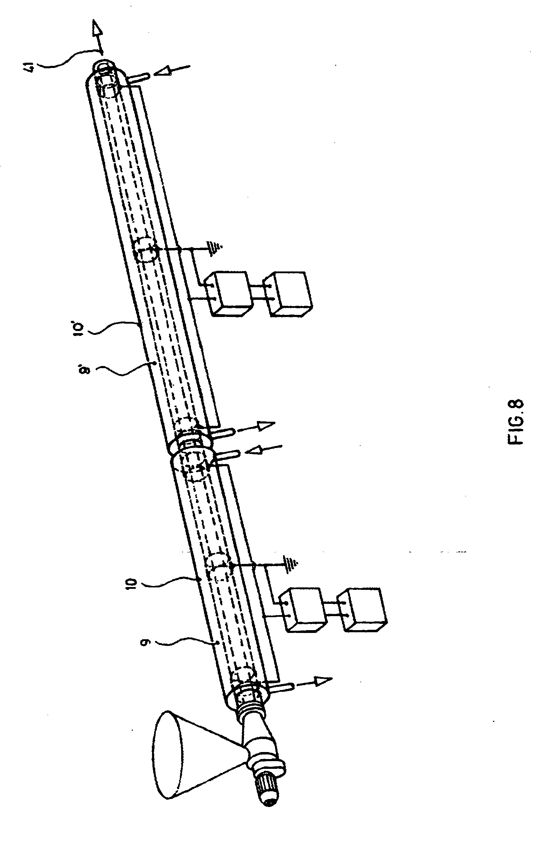

Figure 8 shows device 1 of figure 7, wherein water jackets 10, 10' are added to first tube 5 and second first tube 5'.

It will be apparent that the invention is not limited to the described exemplary embodiment. As already described, the first tube can thus comprise a number of sections which can be connected in parallel or in series as desired, or a combination thereof, for instance two parallel sub-tubes each consisting of two sub-segments connected in series.

The figures are elucidated with reference to a meat-containing mass. It will be apparent that any mass of foodstuff can be pasteurized using the device, such as a mass containing soya ingredients, a mass containing eggs, a mass containing fruits, for instance jam, and a mass containing potatoes.

The use of tubes has the drawback, compared to open transport on for instance a conveyor belt, of a relatively high flow resistance, wherein it must be noted that for instance water or fat present in the treated mass has a lubricating and sliding effect relative to the inner surface of a heated tube. In the case of cooling use can for instance be made of an atmosphere with a high humidity or a protective atmosphere, for instance nitrogen, in which the mass is in principle transported in pressureless manner.

It is generally recommended to allow the pressure in the mass to be no higher than about 4 bar.

## Claims

1. Device for pasteurizing a mass of foodstuff, such as a mass containing soya ingredients, a mass containing eggs, a mass containing fruits, for instance jam, a mass containing potatoes, or a mass containing meat, or the like, which device comprises:
a feed through which said mass can be supplied under pressure to the device at a determined flow rate;
first heating means, comprising:
a first tube, connecting to the feed, of an electrically and magnetically inert material suitable for contact with foodstuff; and
an arrangement of co-acting electrodes which are added to the first tube and which are connected to an RF power generator which generates energy at a frequency in the range of about 10 - 50 MHz to the electrodes such that the mass present in the first tube can be heated during a first residence time in this first tube;
**characterized in that**
co-acting electrodes are disposed with a mutual axial interspace, this interspace being at least 2x, preferably 5x, more preferably 10x larger than the largest linear transverse dimension of the inner space of the first tube and **in that** the electrodes are disposed electrically insulated relative to the inner surface of the first tube coming into direct contact with the mass of foodstuff.

2. Device as claimed in claim 1, wherein the electrodes take a cylindrical form.

3. Device as claimed in any of the foregoing claims, wherein the electrodes are alternately connected to the one terminal and to the other terminal of the RF generator.

4. Device as claimed in any of the foregoing claims, comprising at least one second first tube, to which second first tube is added a second arrangement of co-acting electrodes which are connected to a second RF power generator which generates energy at a frequency in the range of about 10 - 50 MHz to the electrodes such that the mass present in the second first tube can be heated during its second first residence time in this second first tube, which co-acting electrodes of the second arrangement are disposed with a mutual axial interspace, this interspace being at least 2x, preferably 5x, more preferably 10x larger than the largest linear transverse dimension of the inner space of the first tube.

5. Device as claimed in claim 4, wherein the second first tube is disposed in series with the first tube.

6. Device as claimed in claim 5, wherein the second first tube is disposed in parallel to the first tube.

7. Device as claimed in claim 4, 5 or 6, wherein the interspace between co-acting electrodes of the second arrangement of electrodes differs from the interspace between co-acting electrodes of the first arrangement.

8. Device as claimed in any of the foregoing claims, comprising a second tube which connects to the first tube or to the second first tube and to which second heating means are added, wherein the hot mass is held at substantially constant temperature during a second residence time in the second tube.

9. Device as claimed in any of the foregoing claims, comprising a third tube which connects downstream to the at least one first tube or to the second tube and which is provided with cooling means for cooling the hot mass discharged by the first or second tube.

## Patentansprüche

1. Vorrichtung zum Pasteurisieren einer Nahrungsmittelmasse, wie einer Masse, die Sojabestandteile enthält, einer Masse, die Eier enthält, einer Masse, die Früchte enthält, beispielsweise Marmelade, einer Masse, die Kartoffel enthält, oder einer Masse, die Fleisch enthält, oder dergleichen, wobei die Vorrichtung umfasst:
eine Zuführeinrichtung, durch die die genannte Masse der Vorrichtung unter Druck mit einer bestimmten Strömungsrate zugeführt werden kann,
eine erste Heizeinrichtung, umfassend:
ein mit der Zuführeinrichtung verbundenes erstes Rohr aus einem elektrisch und magnetisch inaktiven Material, das für einen Kontakt mit Nahrungsmitteln geeignet ist,
und eine Anordnung von zusammenwirkenden Elektroden, die dem ersten Rohr hinzugefügt sind und die an einem HF-Leistungsgenerator angeschlossen sind, der Energie mit einer Frequenz im Bereich von etwa 10-50MHz für die Elektroden erzeugt, derart, dass die in dem ersten Rohr vorhandene Masse während einer ersten Verweilzeit in diesem ersten Rohr erhitzt werden kann,
**dadurch gekennzeichnet,**
**dass** die zusammenwirkenden Elektroden in einem gegenseitigen axialen Abstand angeordnet sind, der zumindest 2x vorzugsweise 5x, noch bevorzugter 10x größer ist als die größte geradlinige Querabmessung des Innenraums des ersten Rohres, und dass die Elektroden relativ zu der Innenfläche des ersten Rohres, die mit der Nahrungsmittelmasse in direkten Kontakt gelangt, elektrisch isoliert angeordnet sind.

2. Vorrichtung nach Anspruch 1, wobei die Elektroden eine Zylinderform einnehmen.

3. Vorrichtung nach einem der vorhergehenden Ansprüche, wobei die Elektroden wechselweise mit dem einen Anschluss und dem anderen Anschluss des HF-Generators verbunden sind.

4. Vorrichtung nach einem der vorhergehenden Ansprüche, umfassend zumindest ein zweites erstes Rohr, dem eine zweite Anordnung aus zusammenwirkenden Elektroden hinzugefügt ist, welche an einem zweiten HF-Leistungsgenerator angeschlossen sind, der Energie mit einer Frequenz im Bereich von etwa 10-50MHz für die Elektroden erzeugt, derart, dass die in dem zweiten ersten Rohr vorhandene Masse während ihrer zweiten ersten Verweilzeit in diesem zweiten ersten Rohr erhitzt werden kann,
wobei die zusammenwirkenden Elektroden der zweiten Anordnung in einem gegenseitigen axialen Abstand angeordnet sind, der zumindest 2x, vorzugsweise 5x, noch bevorzugter 10x größer ist als die größte geradlinige Querabmessung des Innenraumes des ersten Rohres.

5. Vorrichtung nach Anspruch 4, wobei das zweite erste Rohr in Reihe mit dem ersten Rohr angeordnet ist.

6. Vorrichtung nach Anspruch 5, wobei das zweite erste Rohr parallel zu dem ersten Rohr angeordnet ist.

7. Vorrichtung nach Anspruch 4, 5 oder 6, wobei der Zwischenraum zwischen den zusammenwirkenden Elektroden der zweiten Anordnung der Elektroden von dem Zwischenraum zwischen den zusammenwirkenden Elektroden der ersten Anordnung verschieden ist.

8. Vorrichtung nach einem der vorhergehenden Ansprüche, umfassend ein zweites Rohr, welches mit dem ersten Rohr oder mit dem zweiten ersten Rohr verbunden ist und dem eine zweite Heizeinrichtung hinzugefügt ist, wobei die heiße Masse während einer zweiten Verweilzeit in dem zweiten Rohr auf im Wesentlichen konstanter Temperatur gehalten wird.

9. Vorrichtung nach einem der vorhergehenden Ansprüche, umfassend ein drittes Rohr, welches stromabwärts mit dem zumindest einen ersten Rohr oder dem zweiten Rohr verbunden ist und welches mit einer Kühleinrichtung zum Kühlen der heißen Masse versehen ist, die von dem ersten oder zweiten Rohr abgeführt wird.

## Revendications

1. Dispositif de pasteurisation d'une masse de produit alimentaire, telle qu'une masse contenant des ingrédients à base de soja, une masse contenant des oeufs, une masse contenant des fruits, par exemple de la confiture, une masse contenant des pommes de terre, ou une masse contenant de la viande, ou analogues, lequel dispositif comprend :
un dispositif d'alimentation par l'intermédiaire duquel ladite masse peut être délivrée sous pression au dispositif sous un débit déterminé ;
un premier moyen de chauffage, comprenant :
un premier tube, relié au dispositif d'alimentation, en un matériau électriquement et magnétiquement inerte approprié à un contact alimentaire ; et
un agencement d'électrodes coopérantes qui sont ajoutées au premier tube et qui sont raccordées à un générateur de puissance à radiofréquence qui produit de l'énergie à une fréquence comprise dans la plage de 10 à 50 MHz environ sur les électrodes de telle sorte que la masse présente dans le premier tube peut être chauffée au cours d'une première période de résidence dans ce premier tube ;
**caractérisé en ce que**
les électrodes coopérantes sont disposées suivant un certain intervalle axial mutuel, cet intervalle étant au moins 2 fois, de préférence 5 fois, ou plus préféramment 10 fois plus grand que la plus grande dimension transversale linéaire de l'espace interne du premier tube, et **en ce que** les électrodes sont disposées de manière électriquement isolée par rapport à la surface interne du premier tube entrant en contact direct avec la masse du produit alimentaire.

2. Dispositif selon la revendication 1, dans lequel les électrodes prennent une forme cylindrique.

3. Dispositif selon l'une quelconque des revendications précédentes, dans lequel les électrodes sont raccordées de manière alternée à la première borne et à l'autre borne du générateur à radiofréquence.

4. Dispositif selon l'une quelconque des revendications précédentes, comprenant au moins un second premier tube, auquel second premier tube est ajouté un second agencement d'électrodes coopérantes qui sont raccordées à un second générateur de puissance à radiofréquence qui génère de l'énergie à une fréquence comprise dans une plage de 10 à 50 MHz environ sur les électrodes de telle sorte que la masse présente dans le second premier tube peut être chauffée au cours de son second premier temps de résidence dans ce second premier tube, lesquelles électrodes coopérantes du second agencement sont disposées avec un certain intervalle axial mutuel, cet intervalle étant au moins 2 fois, de préférence 5 fois, ou plus préféramment 10 fois plus grand que la plus grande dimension transversale linéaire de l'espace interne du premier tube.

5. Dispositif selon la revendication 4, dans lequel le second premier tube est disposé en série avec le premier tube.

6. Dispositif selon la revendication 5, dans lequel le second premier tube est disposé parallèlement au premier tube.

7. Dispositif selon la revendication 4, 5 ou 6, dans lequel l'intervalle entre les électrodes coopérantes du second agencement d'électrodes diffère de l'intervalle entre les électrodes coopérantes du premier agencement.

8. Dispositif selon l'une quelconque des revendications précédentes, comprenant un deuxième tube qui est relié au premier tube ou au second premier tube et auquel des seconds moyens de chauffage sont ajoutés, dans lequel la masse chauffée est maintenue à une température sensiblement constante au cours d'une seconde période de résidence dans le deuxième tube.

9. Dispositif selon l'une quelconque des revendications précédentes, comprenant un troisième tube qui est relié en aval du ou des premiers tubes ou au deuxième tube et qui comporte des moyens de refroidissement destinés à refroidir la masse chauffée déchargée par le premier ou le deuxième tube.
